# EUROPEAN PATENT APPLICATION

(11) **EP 4 475 092 A1**
(43) Date of publication of application: **11.12.2024**
(21) Application number: 23178127.9
(22) Date of filing: 07.06.2023
(51) Int. Cl.: G06V 20/52, G06V 10/764, G06V 10/82, G06V 10/25

(54) **IMAGE PROCESSING SYSTEM AND METHOD**

(71) Applicant: SITA INFORMATION NETWORKING COMPUTING CANADA INC., Montreal, QC H3A 1G1 (CA)
(72) Inventor: RYAN, Sid, Quebec H3A 1G1, Montreal (CA)
(74) Representative: Reddie & Grose LLP

(57) **Abstract**

There is provided an image processing system and method for identifying associations between detected entities. The system comprises a processor configured to detect a number of entities within an observable environment, determine the behaviour of the detected entities including identifying predetermined behaviour with a first machine learning model and/or identifying anomalous behaviour with a second machine learning model, and determining an association between a first entity and another entity based on the identified behaviour(s).

## Description

### FIELD OF INVENTION

This invention relates to systems and methods for identifying associations between entities of interest. Further, this invention relates to image processing and machine learning methods and systems. It is particularly, but not exclusively, concerned with uniquely identifying people and vehicles and recognizing anomalies associated with the identified people and vehicles.

### BACKGROUND

The Air Transport Industry (ATI) infrastructure requires developing efficient data connectivity and intelligence to cope with a predicted 8.2 billion journeys that are expected to be made in 2037. However, improvements to current airport processes are required to be able to handle this expected demand in a sustainable way. With increasing passenger journey volumes, using intelligent and automatic solutions is essential for providing secure and efficient services.

One such service is the provision of security measures for passengers and airport personnel.

Current methodologies require security experts to constantly monitor activities while patrolling the airport premises "on the ground", or monitoring close-circuit television (CCTV) video. However, these methodologies involve a high degree of human error in detecting security-critical events in a high-traffic environment. Additionally, in the case of a reported anomaly or following a security incident, it is often cumbersome and time-consuming to manually review video footage from a large number of camera feeds to identify the circumstances leading up to the incident, the cause of the incident, and the actors involved.

Although these instances are rare, it is vital that key actors are identified quickly in order to establish whether they were operating alone, or as part of a group. It is critical that other individuals involved in the incident are detected and identified as quickly as possible in order to stop other potential security threats or incidents. However, as indicated above, this manual process can take a long time and is unreliable. This problem will only be exacerbated as passenger volumes grow each year.

However, numerous problems exist with automatically identify passengers and objects using CCTV images. The majority of known object detection and biometric systems require faces and objects to be aligned with a camera field of view and to maintain a short separation distance from the camera. Additionally, biometric face detection systems often solely rely on face features to identify a passenger. In the majority of cameras the quality of the data is not sufficient to be used to biometrically identify every passenger in the camera field of view. For these systems, the ratio of false negatives will be high. In other scenarios, even with readily observable faces, the collected data is not sufficient enough to detect various aspects of an object. Another common issue with CCTV footage is that passengers can be obscured by others who are closer to the camera. However, algorithms that make use of a whole body representation can also suffer from the problem of a high ratio of false negative results.

It is therefore desirable to overcome or ameliorate the above limitations of the currently known security systems and processes.

### SUMMARY OF INVENTION

The invention is defined by the independent claims, to which reference should now be made. Preferred features are set out in the dependent claims.

According to aspects of the invention, there is provided an image processing method, the method comprising: receiving a plurality of images of an observable environment, detecting a plurality of entities within the observable environment, determining location information and a unique identifier for each entity, determining one or more behaviours of a first entity, comprising identifying one or more predetermined behaviours with a first machine learning model and/or identifying one or more anomalous behaviours with a second machine learning model, determining an association between the first entity and one or more other entities based on the one or more behaviours, and storing data associated with the first entity in a database, the data comprising the location information, unique identifier, and the one or more other entities.

In some embodiments of the invention a third machine learning model detects the plurality of entities and defines a bounding box for each detected entity, each bounding box enclosing the respective entity. In further embodiments of the invention each bounding box is labelled with the unique identifier. In other embodiments of the invention the location information is determined based on the location of a predetermined portion of the bounding box. In some embodiments of the invention the predetermined portion is the midpoint of a bottom edge of the bounding box.

In some embodiments of the invention a fourth machine learning model determines the unique identifier for each entity and defines a characteristic vector associated with each unique identifier.

In some embodiments of the invention the characteristic vector is defined by a plurality of characteristic feature values associated with the respective entity. Other embodiments of the invention further comprise comparing the characteristic vector associated with the first entity with the characteristic vector associated with a further entity in a further image and, if the comparison is within a configured threshold, determining that the first entity and the further entity are the same. In some embodiments of the invention the stored data further comprises the characteristic vector.

In some embodiments of the invention a fifth machine learning model determines the one or more behaviours of the first entity, the fifth machine learning model comprising the first and second machine learning models.

Other embodiments of the invention further comprise training the first machine learning model with a training dataset to recognise the predetermined behaviours. Further embodiments further comprise calculating a score for each association between the first entity and the one or more other entities.

In some embodiments of the invention the first entity is a passenger and the one or more predetermined behaviours include the passenger talking to another passenger, a greeting gesture, or the passenger entering or exiting a vehicle.

In some embodiments of the invention the step of determining an association between the first entity and one or more other entities comprises identifying a plurality of passengers that entered or exited the same vehicle.

In some embodiments of the invention the first entity is a vehicle and the one or more predetermined behaviours include collecting or depositing passengers, remaining stationary in a predetermined zone for longer than a threshold time, and entering or exiting restricted areas.

In some embodiments of the invention the step of determining the association between the first entity and one or more other entities is further based on identifying whether the one or more other entities are proximate to the first entity.

In some embodiments of the invention the anomalous behaviour includes threatening body-language, possession of prohibited items, significant deviations from an expected journey pathway, or serious medical episodes. In other embodiments, if anomalous behaviour is identified then the method further comprises sending an alert.

Further embodiments further comprise associating each image with a timestamp and identifying the time first seen for the first entity based on the timestamp associated with the earliest image including the first entity.

In some embodiments of the invention the step of determining location information for each entity comprises determining a set of pixel coordinates for each detected entity. In some embodiments of the invention the location information comprises latitude and longitude coordinates, or GPS coordinates. Other embodiments further comprise determining a set of latitude and longitude coordinates based on the calculated pixel coordinates. Other embodiments further comprise determining the location information using a 3D to 2D camera correlating system.

In some embodiments of the invention one or more of the plurality of images are provided by a closed-circuit television network (CCTV).

In some embodiments of the invention the database and/or machine learning models may be implemented on a cloud-based server.

In some embodiments of the invention the observable environment is subdivided into one or more polygonal zones, each polygonal zone defined by a plurality of vertices and each vertex being associated with a respective set of GPS coordinates.

Some embodiments of the invention further comprise analysing the stored data to perform one or more of: uniquely identifying each detected entity; determining a security risk associated with each detected entity; analysing vehicle movements; and providing one or more customer services.

According to a second aspect of the invention, there is provided an image processing system, the system comprising a processor configured to perform the steps of receiving a plurality of images of an observable environment, detecting a plurality of entities within the observable environment, determining location information and a unique identifier for each entity, determining one or more behaviours of a first entity, comprising identifying one or more predetermined behaviours with a first machine learning model and/or identifying one or more anomalous behaviours with a second machine learning model, determining an association between the first entity and one or more other entities based on the one or more behaviours, and storing data associated with the first entity in a database, the data comprising the location information, unique identifier, and the one or more other entities.

Embodiments of the second aspect and associated advantages are substantially the same as those of the first aspect.

### DETAILED DESCRIPTION

Embodiments of the invention will now be described, by way of example only, with reference to the accompanying drawings, in which:
Figure 1 is a schematic diagram showing the main functional components of an embodiment of the invention;
Figure 2 is a schematic diagram showing further functional components of an embodiment of the invention;
Figure 3 is an exemplary schematic illustration showing the field of view for a camera;
Figure 4 is an exemplary schematic illustration showing the extraction of timestamp and positional data for an entity;
Figure 5 is an exemplary schematic illustration showing how cameras with overlapping fields of view can be calibrated;
Figure 6 is an exemplary image of a first observable environment;
Figure 7 is an exemplary schematic illustration of a further observable environment;
Figure 8 is a flow diagram showing an example process of uniquely identifying an entity using a new, unseen, image ; and
Figure 9 is an exemplary schematic diagram of a data collection system for the collection and recognition of images.

Although the specific embodiments described below relate to systems, devices and methods for use in the aviation industry, it will be appreciated that the invention is not limited to such embodiments and may equally relate to related industries outside aviation. For example, the invention may find application in other transportation industries, or to the security industry more general for safeguarding buildings, stadia or other infrastructure.

Providing secure and efficient services is imperative for large commercial environments, such as airports, to achieve sustainable growth. Trusted, or enrolled, passengers and staff should be able to take advantage of automated, or semi-automated, processes in order to ease transit within the commercial environment. For example, a seamless customer journey may be provided by enabling a passenger to walk directly to a boarding gate using only facial identification as a means of uniquely identifying the passenger. On the other hand, bad actors and their associates should be identified at the earliest opportunity. This may be possible by identifying if a vehicle has remained stationary for more time than a usual drop off defined by authorities, or the vehicle has moved into a restricted or unauthorised location.

Embodiments of the invention solve the problems outlined above by providing an automated system capable of detecting entities such as vehicles and people within an environment, uniquely identifying the entities, and identifying associations between related entities based on detected behaviours. The system is therefore enables security threats to be pacified more efficiently by tracking the movements of a bad actor to identify a group of associates who may also be bad actors. The automated system is configured to utilise CCTV footage to perform real-time analytics, detect anomalous entities and behaviours, and send security alerts as further described below.

### SYSTEM ARCHITECTURE

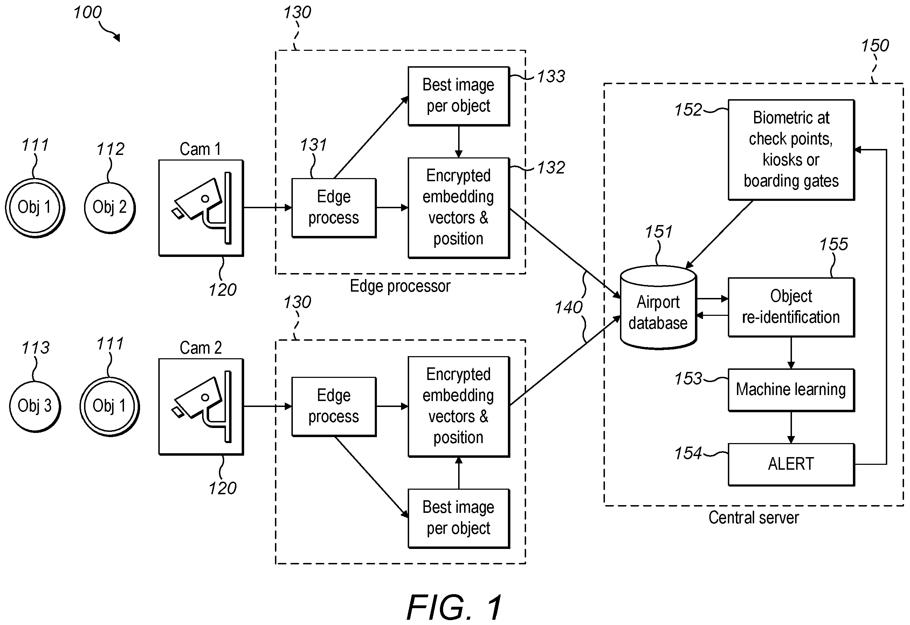

Figure 1 shows a high level overview 100 of an embodiment of the invention.

In a collection and detection phase, images of entities 111 to 113 are captured by recording means, such as cameras 120, located in one or more different locations. Different cameras 120 may record the same entity (for example, entity 113) as the entity moves around the observable environment. For example, in an airport environment, cameras 120 may be located in one or more of: customer car parks, airport terminal entrances and exits, airline check-in areas, check-in kiosks, terminal concourses, customer shopping and/or dining areas, passenger lounges, security and passport control areas, customs and excise areas, arrival lounges, departure lounges, and baggage processing areas. Vehicles and passengers may thus be recorded by multiple cameras at different times during a journey through the airport environment.

An initial image is captured of one or more entities, for example a person, a vehicle or other mode of transport, and the person's accompanying belongings when they first enter an observable environment. Examples of accompanying belongings may include: items of baggage such as hold luggage, cabin luggage, backpacks, laptop bags; and/or items of clothing such as hats and outer coats or jackets. Each entity within the initial image is associated with a unique identifier. The unique identifier is used to link one or more associated entities together. Further images of the one or more entities may be captured by cameras located throughout the environment to monitor the progress of the entities. Each image captured by the cameras is processed and analyzed in order to match the captured image with an earlier image of a particular entity.

In preferred embodiments, the cameras are connected via a closed-circuit television (CCTV) network and are positioned at a plurality of different locations. For example, the cameras may capture images of a passenger drop-off area, a passenger car park, or a queuing area. The cameras may also be located near or within local infrastructure, such as a check-in desk, kiosk desk, a self-service bag drop machine, or an Automatic Tag Reading machine. In addition, the cameras may be positioned to capture any part of a journey through an environment by an entity, such as a passenger or an item of baggage.

It will be appreciated that each image captured by each camera comprises pixels having image sample values. It will also be appreciated that many such cameras may be communicatively connected to a central computer or server in order for the server to analyze a plurality of images. The server may be connected to the CCTV network locally or over a secure VPN to the network. Advantageously, this enables the system to uniquely identify a particular vehicle, passenger or item of baggage, as further described below.

Once captured, the raw images are passed to an edge processor 130 for pre-processing of each image. The use of an edge processor has the following advantages. Firstly, the edge processor reduces the complexity of the received data to one or more embedding vectors that enable the system to perform pre-processing at a local level. This also enables the network infrastructure to transform the data in real-time thereby enabling the server to re-identify the entity quickly and efficiently. Secondly, the edge processors increase the security of personal data because the one or more embedding vectors produced by the edge processors can be used to re-identify an entity but cannot be used to reconstruct the original image of the entity.

In preferred embodiments, the pre-processing steps may include sampling the raw data, reducing noise in the images, and defining a region of interest that bounds all or part of an entity in the image. This enables the system to detect, localize and track each entity.

Each image is processed and analyzed by a machine learning algorithm during an edge process 131 in order to identify one or more embedding vectors 132 associated with each identified entity 111 to 113. Characteristic features, also known as feature landmarks, may be identified with a feature extraction module. The feature landmarks may be used for later biometric identification. The feature extraction module may be located on either the edge-side or the central server-side in order to detect observable faces or vehicles. In preferred embodiments, the edge processor 130 processes an image to extract face landmarks of each identified face to produce one or more embedding vectors describing the biometric features associated with each identified face. Similarly, the edge processor 130 processes an image to produce an embedding vector for each object identified in the image. In preferred embodiments, the system 100 uses machine learning techniques to identify facial characteristics of each identified passenger, such as gender, emotion, sentiment, and age group, which may be used to infer the identity of the particular passenger. For example, the facial characteristics may be compared to known biometric data to verify the identity of a passenger. In addition, the edge processor 130 identifies the location of each identified entity. Further, in some embodiments the edge processor 130 includes a local memory that includes a set of images of each entity from a variety of different viewing angles.

In some embodiments, the edge processor 130 may select the best image 133 for each entity, in other words the highest quality image that shows the most number of characteristics for the entity, and use that best image 133 to further define the one or more embedding vectors 132. A best, or optimal, characteristic vector may be selected for a passenger based on a set of optimum characteristic values associated with features of the passenger. This may be achieved by the machine learning algorithm identifying features or points of interest (such as the eyes, or feet, or hands) when analyzing an image of a passenger. When the distance between certain features, such as the passenger's eyes, are at a maximum detected distance it means that the face or body of the passenger is most closely aligned with the camera view point, i.e. the passenger is looking squarely at the camera. Identifying the image in which the passenger is substantially facing the camera enables the maximum amount of characteristic values associated with the passenger's characteristic features to be captured and included in the one or more embedding vectors. In some embodiments, a score may be associated with each embedding vector based on the distance between feature vector values. An embedding vector may be replaced with a "better" embedding vector if the embedding vector score is exceeded.

In some embodiments, the system generates a set of K characteristic vectors from K received images, where K represents the number of different viewing angles of a particular entity. For example, where K = 4, the viewing angles may be of the front, back, left and right sides of the entity, with approximately 90 degrees separating each viewing angle. In other words, K defines how many distinct images must be detected for each entity and results in K different characteristic vectors that are each associated with the same entity. In preferred embodiments, a plurality of characteristic vectors associated with an entity are generated and grouped into a cluster. The cluster centroid is determined and the K closest characteristic vectors (in the Euclidean distance sense) are identified. This advantageously reduces noise and prevents the use of outlier data points.

Once the one or more embedding vectors 132 have been generated, they are encrypted along with the best images 133 of each entity by an encryption system on the edge processor 130 before being transmitted via messages 140 to a central server 150 where they are received by a database 151. In some embodiments the database 151 is structured such that data is stored according to its corresponding unique ID. In further embodiments, the database 151 is further structured such that data associated with a particular unique ID is stored according to the particular camera that the data derives from.

The database 151 may also receive data from other external systems and data sources 152, such as biometric data obtained from security checkpoints, electronic check-in kiosks, electronic boarding gates, or automatic border control gates. The central server 150 maps all the data received from the cameras 120 and identifies recurring images of the same entity to produce a unified view of the entity. In some embodiments, the unified image can be mapped to a virtual environment such as a digital twin. The central server 150 also performs an analysis of the face landmarks and embedding vectors to produce metadata of each identified entity to enable each entity to be tagged with a unique identifier.

A machine learning core 153 analyses the information received by the database 151 and identifies the behaviour of each identified entity, and identifies correlations and relationships between entities based on the identified behaviours.

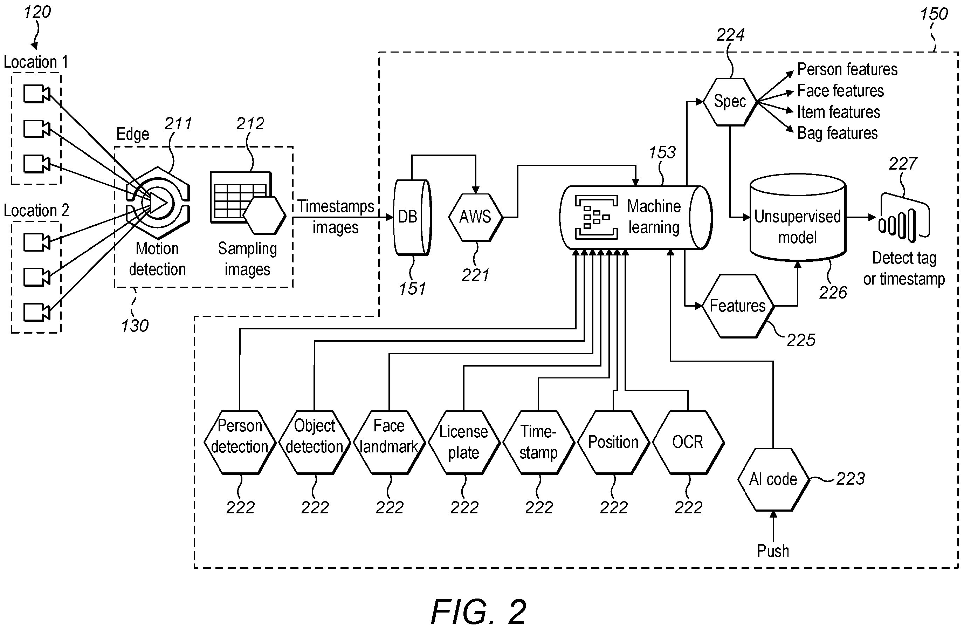

Figure 2 illustrates a more detailed version of the system architecture shown in figure 1. The system of figure 2 includes the cameras 120, edge processor 130 and central server 150 as described above.

Further to the above, the edge processor 130 comprises one or more pre-processing modules 211 and one or more feature extraction modules 212. The pre-processing modules 211 remove noise from the captured images of the entities and detect, localize and track each entity. The feature extraction module 212 processes each image and extracts the images with the highest number of identified features, associates each image with a timestamp and synchronizes the input of all cameras 120.

The server 150 receives and stores data and images received from cameras 120 and performs computational processes to determine the identifier associated with each entity and to use that identifier to track each entity, for example for the duration of a journey. The data exchanged by the system can either exist in a central or distributed architecture, whereby a user may have access to the entirety of the original data or a user is provided with an anonymized set of data which enables entities to be tracked without revealing personal information relating to passengers. Additionally, the system may encrypt the data to ensure that stored passenger-related information remains confidential.

In preferred embodiments, the server 150 comprises a database 151 and AWS module 221, where data can be uploaded to be stored or further analyzed. In some embodiments, the database and AWS module 221 are cloud-based.

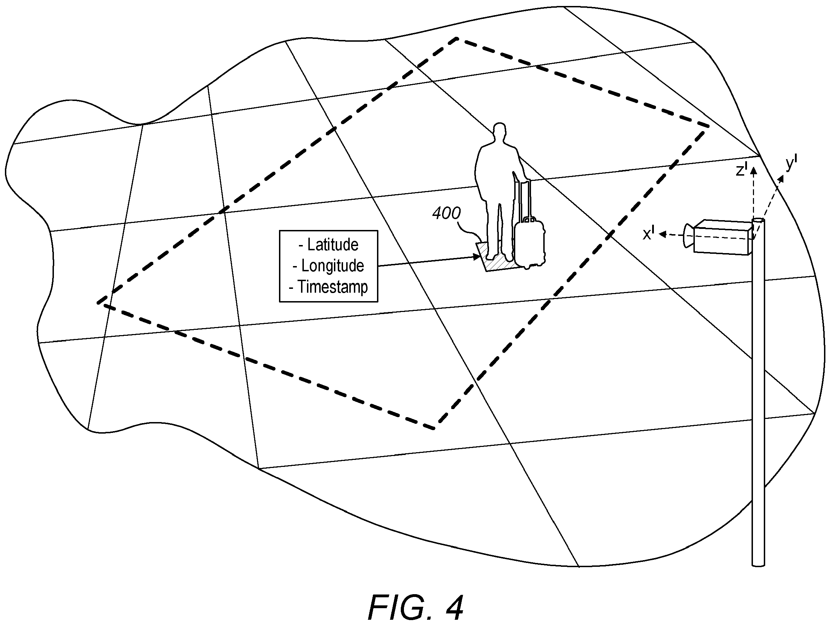

The system further comprises external sources of data 222 that store supplementary data that can be added to the image or its metadata. In the embodiment shown in Figure 4, the external sources of data are provided by a Person Detection module, an Object Detection module, a Face Landmark module, a Licence Plate module, a Timestamp module, a Position module, and an OCR module. In preferred embodiments, the supplementary data includes license plate tag number, timestamp of the recorded videos, and an OCR algorithm that extracts written digits and characters of images as a feature.

In preferred embodiments, the server 150 further comprises one or more main machine learning cores 153 that include a first set of machine learning algorithms to detect entities, create bounding boxes around each detected entity, and identify an associated unique ID from the extracted feature vector. The first set of machine learning algorithms may also perform the extraction of feature vectors associated with each detected entity from one or more captured images if this is not performed by the edge processor 130.

The machine learning cores may also include a second set of machine learning algorithms that can identify correlations or associations between detected entities, and which can detect predetermined, labelled, behaviours and which can also detect abnormalities, i.e. anomalous behaviour. Examples of anomalous behaviours may include items of infrastructure being moved impermissibly, the belongings of a passenger being left unattended, or a vehicle entering a restricted area. In the event that the system 100 identifies an anomaly, or a previously identified suspicious or dangerous behaviour, the system may generate an alert that is sent as a message to inform the related authority as further described below. The machine learning cores may be run locally, or may be based remotely on a cloud server.

The server further comprises one or more portals 223, such as an AI Code portal, that enable updating and downloading results of the machine learning core 153 remotely and one or more descriptor outputs 224 that produce the descriptive labels produced by the machine learning model 153. For example, the descriptor outputs can be paired or matched with a corresponding unique ID in order to categorize passengers according to their age, gender or an emotion group. Similarly, vehicles may be categorized according their type, make/model, size and colour. One or more non-descriptive vectors 225 may be produced that are based on the non-descriptive features of an entity. The non-descriptive vectors 225 are used to identify the closest images to a selected image of an entity, as further described below.

The server may further comprise one or more unsupervised model modules 226 which use algorithms such as a nearest neighbor-based model to identify the closest images to a selected image of an entity based on the Euclidean distances between a feature vector of the selected image and the feature vectors of other images to uniquely identify similar entities, as further described below. In this context, unsupervised learning is a branch of machine learning that groups data that has not been labelled or categorized by identifying commonalities in the data. Accordingly, unsupervised learning techniques may be used to identify anomalous behaviours.

Finally, in preferred embodiments the server further comprises one or more reverse mapping modules 227 that uniquely identify an entity from the identified closest image using lookup tables, as further described below.

In preferred embodiments, a wired or wireless communications network is used to communicatively couple the functional components shown in figure 2 together, thereby allowing data exchange between each of the components. The network may also be used to receive an image of a passenger or an item captured by a camera or other recording devices. In all cases, wired or wireless communications protocols or CPU or GPU processes may be used to exchange information or process data in the functional components.

In preferred embodiments of the invention, the messaging or communication between different functional components of the system architecture is performed using the XML data format and programing language. However, this is exemplary, and other programming languages or data formats may be used, such as REST\JSON API calls. These may be communicated over HTTPS using wired or wireless communications protocols which will be known to the skilled person. Machine learning and computer vision methods and libraries may also be advantageously used. Pictures and videos obtained from cameras within the system may also be streamed to a local server or a cloud based data center.

In preferred embodiments, the different functional components described below may communicate with each other using wired (including Power Over Ethernet - PoE) or wireless communication protocols which will be known to the skilled person. The protocols may transmit service calls, and hence data or information between these components. Data within the calls is usually in the form of an alpha-numeric string which is communicated using wired or wireless communication protocols.

The system may comprise one or more different models, such as computer vision models and machine learning methods. In preferred embodiments, these models may include pre-processing, object tracking and extraction, pattern matching, person and face detection, object recognition, posture recognition, and the like. Each of the models may run on a separate computer processor or server, although it will be appreciated that some embodiments of the invention may in principle run on a single computer or server.

In preferred embodiments, the processes described above may be performed in real-time using a centralized processor and receiving data at the centralized processor. However, one or more edge computing processors may be used to extract only data that is necessary to be transmitted to the centralized processor. This may advantageously improve the security of the network data over the network while reducing the network bandwidth requirements to a fraction of what would be otherwise required for raw data transfer. In some embodiments, data and metadata described above may be shared to a cloud base processing system to enable, for example, the identification and tracking of entities in multiple locations across the globe.

In preferred embodiments, a wired or wireless communications network is used to communicatively couple one or more of the functional components shown in Figure 2 together, thereby allowing data exchange between each of the component(s). The network may also be used to receive an image of a bag captured by a camera or other recording devices. In all cases, wired or wireless communications protocols or CPU or GPU processes may be used to exchange information or process data in the functional components.

The computer or server comprises machine learning, deep learning and neural networks. Such machine learning and neural networks are well known to the skilled person and comprise a plurality of interconnected nodes. This may be provided a web-service cloud server. In preferred embodiments, the nodes are arranged in a plurality of layers (L₁, L₂, ...L_{N}) which form a backbone neural network. For more specialized feature extraction of images, a plurality of feature abstraction layers is coupled to the backbone neural network to form a deep learning model.

Preferred embodiments of the invention are able to comprise part of an alerting system that provides a live view and location of each entity and sends an alert when an anomaly is detected.

### SYSTEM CONFIGURATION

In an initial phase, images and data may be pre-processed in order to improve the operation of the claimed system.

For example, a training database may be created once enough raw data has been captured in order to train and improve the machine learning models. In some embodiments, newly collected data is added to the training data in order to adjust the models.

In some embodiments, raw images obtained from cameras are pre-processed to remove noise. In certain environments, noise may derive from a wide variety of sources such as X-ray scanning devices, network noise, and the use of long length cables for transmitting data. In such instances, signal noise is manifested as grey pixels and so images that are identified as having excessively large numbers of grey pixels are removed during pre-processing. In further embodiments, frames with excessive amounts of noise may be removed by determining whether an image brightness is greater than a first threshold and less than a second threshold and only processing the image if the image brightness is within the first and second thresholds. In some embodiments, other filtering and image processing techniques may be used to remove other low-quality images, such as excessively dark or excessively white images.

In other embodiments, the cameras are synchronized to ensure that data obtained from each camera is collected accurately. This may involve identifying entities having an unusual and distinctive colour or pattern and identify a time difference between overlapping cameras that detect the identified entity, thereby synchronizing the plurality of cameras.

In a preferred embodiment, the images are down sampled to maintain an aspect ratio. For example, the aspect ratio may be down sampled to fit a 256 x 256 image. This advantageously enables the system to maintain accuracy when processing images obtained from cameras having different resolutions.

In a preferred embodiment, images are cropped before being saved. This pre-processing step advantageously improves the efficiency and accuracy of correctly identifying an entity in a subsequent recognition phase, and additional minimizes storage requirements. For example, a raw 15-minute input video recording may occupy about 1.1 GB of data at 640x480 resolution and 5 FPS. However, cropping the images to only include a region of interest can reduce the file size to approximately 10 to 60 MB of data, thereby reducing the storage requirements by a factor of 20-100 times.

In some embodiments, the images may be subjected to background subtraction techniques such as motion-based background subtraction methods including Mean of Gaussian (MOG), MOG2, CNT, GMG, or LSBP. The use of background subtraction can improve the mode detection speed and is able to remove noise from the images, thereby enabling more efficient processing of an image by the edge processor. The use of background subtraction techniques also advantageously enables moving objects to be extracted from relatively fixed backgrounds, as well as identifying and isolating foreground objects on a moving backgrounds.

Once the images have been pre-processed as described above, metadata is created from the images, such as characteristic vectors, which contain values associated with characteristic features of a detected entity. In preferred embodiments, the characteristic vector values are associated with any one or more of biometric data, face features, height, style, clothing, pose, gender, age, emotion, destination gate, and gesture recognition. However, it will be appreciated that this list is exemplary only and that in principle any characteristic value may be included in the characteristic vector.

The generated metadata may also include bounding boxes, which define a region or area of an image that encloses a detected entity. In preferred embodiments, the bounding boxes may be generated by comparing a plurality of image frames, applying an algorithm to each frame that subtracts the foreground of the image from the background of the image and then determining whether the identified object is a foreground object, positioning a boundary box around the moving foreground object, and tracking the foreground object over time.

As indicated above, the system 100 comprises an array of cameras 120 configured to capture images of one or more entities. In some embodiments, the cameras 120 may provide high quality images by reducing the number of unnecessary background pixels and improving the capture of informative features such as the faces of passengers, colour and model of a car, or wheels of a bag. For example, the shutter speed and other image capturing configurations are set to capture the highest quality data, and the storage format is set as the highest quality possible when considering the networking and local storage capacities. In some embodiments, a data or image compression method is used to improve the performance of the transfer and storage of data.

Each camera captures images of every entity that passes by its field of view and creates a dataset of images for processing. Each image is timestamped and associated with location information so that the exact location of each entity can be tracked by the system. In preferred embodiments, the location information may be latitude and longitude coordinates, or x- and y- coordinates that are defined in relation to a local point of origin.

Each image in the dataset is analyzed to identify each entity and associate a unique identity number with each entity. The system may match a plurality of images to the same unique identify number if the images are identified to be associated with the same entity.

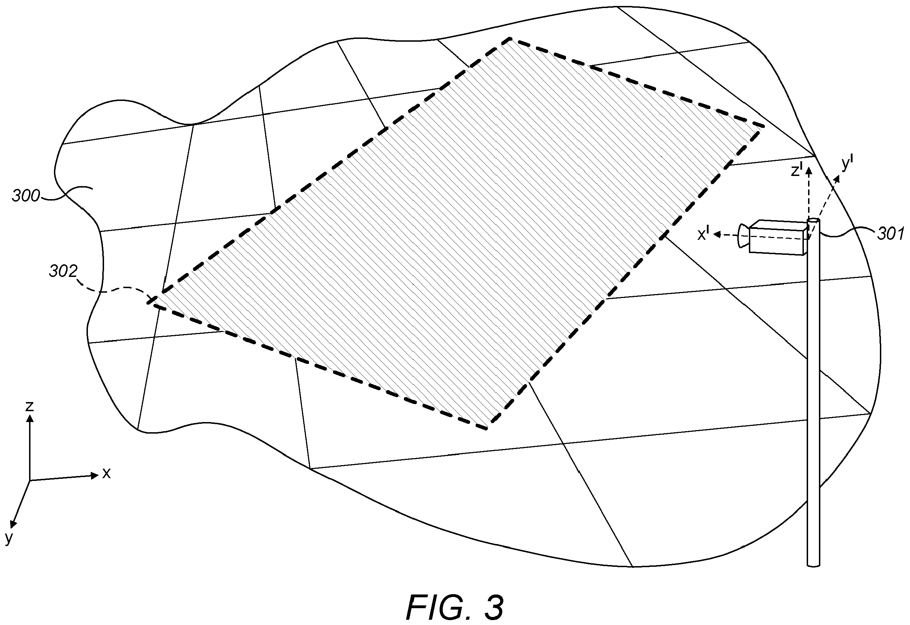

Figure 3 shows an observable environment 300 where a number of cameras 120 may be deployed. As shown in figure 3, a first camera 301 is orientated to capture videos or a sequence of images and data relating to one or more entities within the observable environment 300. The camera has a field of view which may be limited to a region of interest 302. In some embodiments, the region of interest can be maximized to equal the field of view for the camera.

In some embodiments, each camera provides data relating to the angle and location of the camera's field of view to enable to calculation of the relative positions of each entity within the field of view. In addition, in preferred embodiments the recorded images are also associated with a corresponding timestamp.

In other embodiments, the cameras 120 can be replaced or equipped with other types of sensors, such as radar, LiDAR, 3D cameras, time-of-flight sensors and stereo cameras. In further embodiments, one or more cameras 120 may be installed on an autonomous robot in order to create a 3D view of the environment 300 by obtaining location information from the autonomous robot. The 3D view may then be combined with the images obtained from real-time cameras and sensors.

In alternative embodiments, shown in figure 4, a machine learning algorithm may use the angle of a camera 120 or the relative position of the camera in relation to visible indicators located on the floor to estimate the distance and relative position of an observed entity. The positional data and timestamp 400 may be stored on the edge module or may be sent to the central server for further processing, metadata creation, or to create a virtual reality or augmented reality version of the environment. This may also advantageously enable the system to limit the extent of a search when attempting to re-identify a passenger, as further described below.

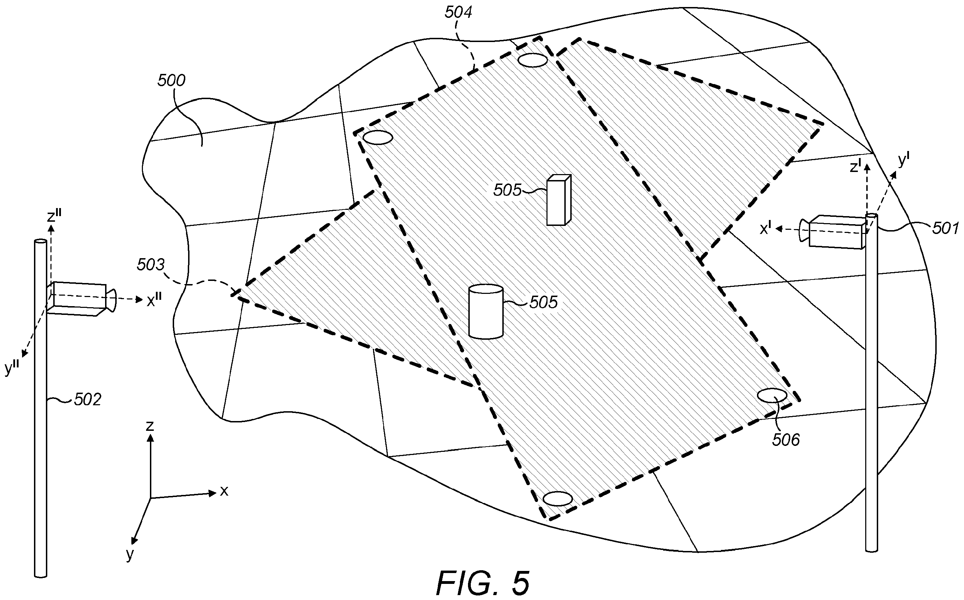

In some embodiments, the cameras 120 may be calibrated. Figure 5 shows an observable environment 500 where a region of interest 504 is demarcated by boundary indicia 506. In some embodiments, the boundary indicia 506 may be signs located on the floor and which are detectable by the cameras 120. The boundary indicia 506 provide a fixed reference point to enable the view of each camera to be calibrated. Where a plurality of cameras are employed, the field of view of a first camera 304 may overlap with another field of view 503. In order to avoid replicating the identification of entities, in preferred embodiments stationary objects that can be seen by each camera are used to adjust the overlap between the field of view of each camera by using the corners of the relatively stationary objects to calibrate the cameras 120.

As described above, a plurality of cameras 501 may be located throughout a particular environment, for example at an airport. Usually, a large number of CCTV cameras are required to monitor large buildings and complex environments, such airports with multiple terminals. Many of these cameras have overlapping fields of view, which can increase the complexity of uniquely detecting and tracking an entity through the environment. Additionally, in some areas there are camera "blind spots" where an area is not covered by any camera's field of view.

In preferred embodiments, these issues may be resolved in the following manner.

First, a precise map of the environment is generated, for example using 2D or 3D GPS coordinates, scans, or using a Digital Twin, and overlayed with an accurate Earth map to provide a set of calibrated latitude and longitude coordinates for each building and infrastructure feature in the environment. Each object in the camera's field of view may be defined as a single point on the surface of the Earth using a set of latitude and longitude coordinates. The accuracy of the location of this single point depends on the decimal degree of the latitude and longitude coordinates: for example, coordinates accurate to 6 decimal points will have a location that is accurate to approximately 10 cm.

Next, anchor points 505 are identified in each camera's field of view. The anchor points 505 may be fixed infrastructure objects in a camera's field of view that has a known and unchanging location, and hence a fixed set of latitude/longitude coordinates. Alternatively, the anchor points 505 may be a distinctive person, or autonomous vehicle, with an accurate GPS positioning device that moves around the area covered by the camera and simultaneously provides location data in both Cartesian coordinates (i.e. arbitrary X-, Y-, and Z-coordinates) and latitude/longitude. In some embodiments, where the image is segmented into one or more discrete zones, each zone may have at least one anchor point.

A set of Cartesian coordinates are then calculated for every detected object (person, vehicle, aircraft, chair, ducts and pipes, etc.) in each camera's field of view. The Cartesian coordinates of a pixel, or group of pixels, associated with each detected object may then be converted to a set of latitude and longitude coordinates using the relative distances and angles between known locations of the anchor points 505 to estimate the real-world position of the detected object. Accordingly, this process provides a set of latitude/longitude coordinates for every object detected by every camera.

In some embodiments, a 3D to 2D camera correlating system may be employed to provide can provide more accurate X,Y pixel coordinates, and thus more accurate real-world coordinates, for cross-camera tracking as well as tracking passengers without relying on biometric data in areas where a 3D camera can be installed.

For cameras with complete or partial overlapping fields of view, the system uses a configured threshold to assign a unique-ID for the same object shown in different images. As described above, this is achieved by comparing a Euclidean distance score between a characteristic vector associated with an object (person, vehicle, aircraft, chair, ducts and pipes, etc.) detected in a first image with a characteristic vector associated with an object detected in a second image. If the Euclidean distance is within a predefined threshold (i.e. if the semantic similarity is below a threshold), then the system considers the same object to have been detected and assigns the object in both images with the same unique-ID. For cameras with non-overlapping fields of view, which lead to camera blind spots, the system calculates an average speed of each moving detected object and calculates when the object is likely to re-emerge from the blind spot in the next camera's field of view. This may be achieved by using the location information determined above to calculate a speed of the moving object - for example, an average or maximum speed. The system then calculates the probability that the same object will be detected between two different cameras. For example, the probability that a walking person will be detected by cameras that are 200m apart within a time period of 5 seconds is very low - but the probability will be much higher for a time period of 2 minutes. The probability may be calculated based on a calculated growing circle that starts from the timestamp that the moving object was last seen in a camera field of view. The growing circle may be defined to grow at a rate defined by the average speed of the object. Additionally, if the moving object is a person then the system also compares the characteristic vector associated with the person with the vector generated for another person detected by a different camera in order to produce a similarity score between the two vectors for use with re-identification. For example, if the similarity score exceeds a predefined threshold then the system considers the person to have been re-identified by the second camera.

### SYSTEM OPERATION OVERVIEW

Embodiments relate to processing images to generate metadata associated with identified entities, and to use the processed images and metadata to identify entities that are interconnected or associated with one another. This, in turn, may enable further analysis and identification of security threats, or enable the provision of automated services.

Embodiments of the invention achieve this aim by analysing images of an observable environment in order to detect one or more entities within that environment. Each entity is analysed to determine a set of characteristic features, which may be used to uniquely identify the entity, and location information, which may be used to track the movement of each entity over time. The movement and actions of each entity are monitored to determine the behaviour of each entity, which may be known behavioural patterns and/or anomalous behaviour. Based on these behaviours, it is possible to determine associations between entities - for example, two passengers embracing would indicate a close association or level of familiarity between the two passengers. Similarly, a handshake would indicate an association between two passengers, albeit less familiar. Additionally, two passengers sharing the same vehicle also may be indicative of a close association. The metadata gathered on each entity is stored in a database for later analysis as further described below.

Embodiments of the invention can automatically detect security events, or a security threat may be initiated by a security agent. The location history of an identified entity linked to the security threat can be automatically extracted using real-world location coordinates and timestamps associated with stored images of the entity. In addition, the stored metadata may be interrogated to identify a means of transport associated with the entity, and other entities associated or correlated with the same means of transport. Each correlated entity may be provided with a confidence score. Embodiments of the invention provide quick video analytics and metadata reporting to help prevent catastrophic events. Outputs of the system may be reviewed by security agents before action is taken to ensure accuracy.

In preferred embodiments, images are pre-processed using a first machine learning model as described above.

A second machine learning model receives images of a local environment and detects one or more entities in each image. For example, the entities may include: vehicles, such as cars, trucks, buses, trains etc.; people, such as passengers, staff and crew, security personnel, service providers, etc.; and other types of objects, such as infrastructure, buildings, bus stations, exit/entry gates, etc.

The second model also generates metadata associated with each entity, as described above.

In some embodiments, the second machine learning model generates one or more characteristic vectors that uniquely represent the entity, as described above using feature extraction techniques. The characteristic vectors enable the same entity to be reidentified in different images, or video frames, over time and/or in different cameras. In some embodiments, the second model generates bounding boxes that enclose each detected entity. Additionally, in further embodiments, the second model generates location information associated with each entity based on a predetermined pixel location for the respective bounding box. In preferred embodiments, the predetermined pixel location is the lower mid-point of the bounding box.

Finally, the second model may also associate each identified entity with a set of real-world coordinates by converting the Cartesian coordinates for the predetermined pixel location into latitude and longitude coordinates based on the known position of anchor points.

A third model receives the detected entities and bounding boxes from the second model and labels each entity with a unique ID. This may be achieved by comparing sets of characteristic vectors and pairing the generated characteristic vectors for each identified entity with a unique identifier (ID) such that distinct entities are provided with different unique IDs. On the other hand, the system will detect a match between sets of characteristic vectors if the same entity is detected later, or by a different camera. If an entity is re-identified then they are matched with the previously assigned unique ID. Thus, the same entity will be assigned the same identifier regardless of which camera image the entity appears in. Additionally, the set of characteristic vectors associated with the entity may be updated if the system can obtain better data for any of the characteristic features associated with the respective entity from later images of the entity. Each unique ID and the respective set of one or more characteristic vectors may be stored on a server along with encrypted images of each entity for further processing.

A fourth machine learning model identifies correlations or associations between detected entities. In some embodiments, this is achieved by identifying known behavioural patterns. For example, the model may identify one or more behaviours indicative of: passengers talking to each other; greeting gestures, such as a hand shake, a bow, a hug, a kiss, an elbow bump, a fist bump, or a wave; exchanging objects; or sharing vehicles with other passengers. Identifying shared vehicles may be achieved by analysing the camera images to identify the first image or video frame where an entity is first identified, a so-called "entering point". The entering point may be a transport terminus or interchange, such as an arrival bus station, a concourse main entrance, a taxi drop off, or a car park. If the entity is a person, the person may be associated with a mode of transport by identifying whether the person's entering point is proximate to a vehicle. The person may be further associated with all other people having entering points that are also proximate to the same vehicle. For example, a passenger that is identified as getting out of a taxi will be associated with all other passengers who emerge from the same taxi at the same time. Accordingly, the known behavioural patterns may include a passenger entering or exiting a vehicle.

The fourth machine learning model also identifies unidentified, anomalous, behaviour. Anomalous behaviours may include threatening body language, serious medical episodes, or unauthorised access to restricted areas.

Embodiments of the invention may monitor for anomalies in the following ways. First, monitoring secure zones that should only be accessed by certain authorized users, or by no users at all, and issuing an alert if an unauthorized user enters the secure zone. Second, monitoring for an expected criteria or condition such as detecting the use of emergency lighting. Third, using behavior detection models to monitor sudden unseen changes, for example by analyzing crowd behaviour and identifying if an area of the crowd starts running unexpectedly.

In some embodiments, the system 100 may detect anomalies using the characteristic vectors and associated unique ID. For example, if the unique ID of a passenger checking in a bag does not match the unique ID of a passenger collecting the bag at a pick-up location, then the system may detected abnormal behaviour. In addition, if the system identifies an object to be the same shape as a prohibited object, such as a weapon, then an anomaly alert may be sent automatically.

If an anomaly is detected, an alert may be generated that may be sent to various external systems, such as security checkpoints, electronic check-in kiosks, electronic boarding gates, or automatic border control gates. In some embodiments, the type of alert issued may depend upon the type of anomaly detected. For example, if a gun or explosion are detected then a more urgent alert may be issued, and to a wider number of external systems and destination authorities. In preferred embodiments, the external systems will prevent the entity that triggered the alert from proceeding further, for example by operating one or more security checkpoints, electronic check-in kiosks, electronic boarding gates, or automatic border control gates. In some embodiments, the system performs entity re-identification to establish whether the same entity has been detected at a plurality of different locations, and to identify any known associates of the bad actor. This may be achieved by identifying the unique ID of the bad actor and using the stored data to trace the location history of the bad actor, and determine any other entities that are correlated or associated with the bad actor.

The system may additionally interface with biometric systems, such as a passport check point, to verify the identity of a passenger. In such embodiments, the passenger's identity may also be stored in the database along with the assigned unique ID for future use at immigration or aircraft boarding points. Accordingly, the system can be leveraged to provide personalized services for passengers, such as enabling a recognized and verified passenger to proceed through security without requiring a boarding pass or to board a flight without requiring a passport check.

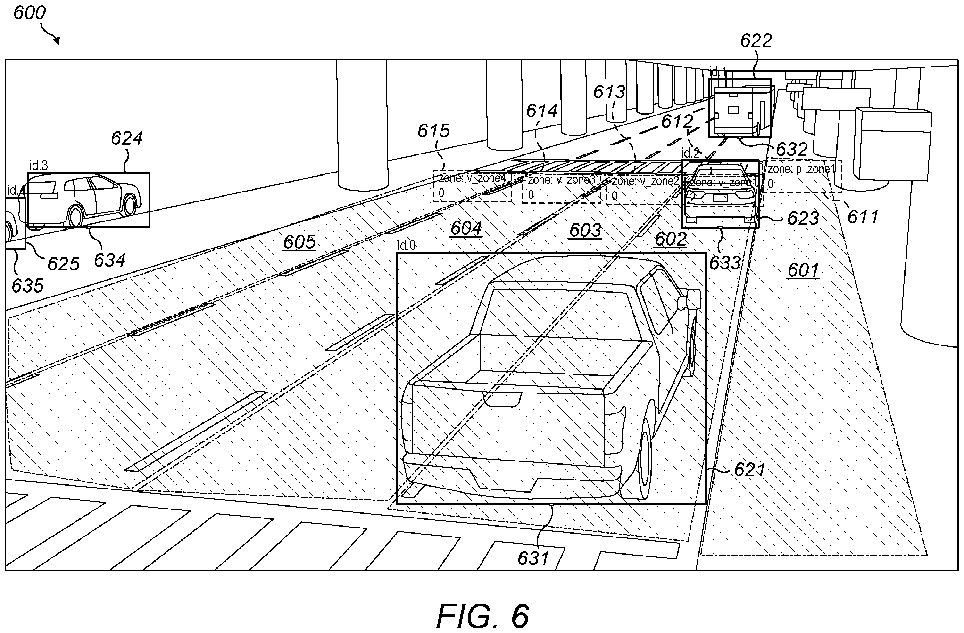

Figure 6 is an example of an example observable environment 600, which in the embodiment of Figure 6 is a processed CCTV image showing a number of different entities within an observable environment. In the embodiment shown in Figure 6, the observable environment 600 shows a passenger drop off point at an airport, which includes a multi-lane road and adjacent pavement, and a peripheral road outside the drop off point that is still within the airport environment.

The processed CCTV image has been processed in order to provide additional information and metadata using machine learning techniques as further described herein.

First, the original CCTV has been augmented with a number of discrete zones that segment the drop off point in the observable environment.

A first zone 601 is associated with an observable area of the pavement lying adjacent the multi-lane road in the drop off point. The first zone 601 therefore defines a first pedestrian zone. The first zone 601 includes a respective text label 611 that provides data associated with the first zone 601. In the example shown in Figure 6, text label 611 includes a first text line that provides the zone name, "*zone:p_zone1*", and a second text line that provides the number of detected entities within the zone, "0". Accordingly, the processed CCTV image indicates that no entities have been detected within the first pedestrian zone.

A second zone 602 is associated with an observable area of a first lane of the multi-lane road in the drop off point. The second zone 602 therefore defines a first vehicle zone. The second zone 602 includes a respective text label 612 that provides data associated with the second zone 602. In the example shown in Figure 6, text label 612 includes a first text line that provides the zone name, "*zone:v_zone1*", and a second text line that provides the number of detected entities within the zone, "2". Accordingly, the processed CCTV image indicates that two entities have been detected within the first vehicle zone. These vehicles have been provided with identifiers "ID: 0" and "ID: 2". A further vehicle, "ID: 1" has been identified further down the first lane of the multi-lane road - however, this vehicle is not determined to be within the second zone 602, and so is not counted as an entity detected within the second zone 602.

A third zone 603 is associated with an observable area of a second lane of the multi-lane road in the drop off point. The third zone 603 therefore defines a second vehicle zone. The third zone 603 includes a respective text label 613 that provides data associated with the third zone 603. In the example shown in Figure 6, text label 613 includes a first text line that provides the zone name, *"zone:v_zone2*"*,* and a second text line that provides the number of detected entities within the zone, "*0*". Accordingly, the processed CCTV image indicates that no entities have been detected within the second vehicle zone.

A fourth zone 604 is associated with an observable area of a third lane of the multi-lane road in the drop off point. The fourth zone 604 therefore defines a third vehicle zone. The fourth zone 604 includes a respective text label 614 that provides data associated with the fourth zone 604. In the example shown in Figure 6, text label 614 includes a first text line that provides the zone name, "*zone:v_zone3*", and a second text line that provides the number of detected entities within the zone, "0". Accordingly, the processed CCTV image indicates that no entities have been detected within the third vehicle zone.

A fifth zone 605 is associated with an observable area of a fourth lane of the multi-lane road in the drop off point. The fifth zone 605 therefore defines a fourth vehicle zone. The fifth zone 605 includes a respective text label 615 that provides data associated with the fifth zone 605. In the example shown in Figure 6, text label 615 includes a first text line that provides the zone name, "*zone:v_zone3*", and a second text line that provides the number of detected entities within the zone, "*0*". Accordingly, the processed CCTV image indicates that no entities have been detected within the fourth vehicle zone.

Second, every unique entity detected in the original CCTV has been surrounded by a bounding box, and associated with a unique identifier and location information.

The processed CCTV image shows five different entities that have been uniquely identified. The first vehicle is contained by bounding box 621 and is associated with identifier "ID: 0" and location identifier 631. The second vehicle is contained by bounding box 622 and is associated with identifier "ID: 1" and location identifier 632. The third vehicle is contained by bounding box 623 and is associated with identifier "ID: 2" and location identifier 633. The fourth vehicle is contained by bounding box 624 and is associated with identifier "ID: 3" and location identifier 634. The fifth vehicle is contained by bounding box 625 and is associated with identifier "ID: 4" and location identifier 635. In the example observable environment 600, all five entities are road vehicles. However, it will be appreciated that the entities may also be aircraft, people, luggage, furniture, items of infrastructure, etc.

As indicated above, the first and third vehicles are located in the second zone 602. The second vehicle is located in the first lane of the multi-lane road, but outside the second zone 602. The fourth and fifth vehicles have been detected despite not being at the drop off point located, and are instead located on the peripheral road outside the drop off point within the CCTV camera's field of view.

Location information is associated with each entity based on a pixel location for each entity and determining real-world coordinates corresponding to the respective pixel location. In preferred embodiments, location information is associated with each entity by determining the midpoint of the lower edge of a respective bounding box.

In the example of Figure 6, the first vehicle bounding box 621 has a lower mid-point 631 and so the first vehicle is associated with location information based on the pixel location of the lower mid-point 631. In the manner described above, the pixel location of mid-point 631 may be mapped from Cartesian coordinates to latitude/longitude, or GPS coordinates, using known anchor points in the camera's field of view.

In some embodiments, the system 100 provides a parking spot occupancy counter that calculates a parking time for each vehicle in a car park. The system may further provide a traffic counter for counting how long each vehicle spends in a drop-off/pick-up zone to improve traffic flow and passenger processing.

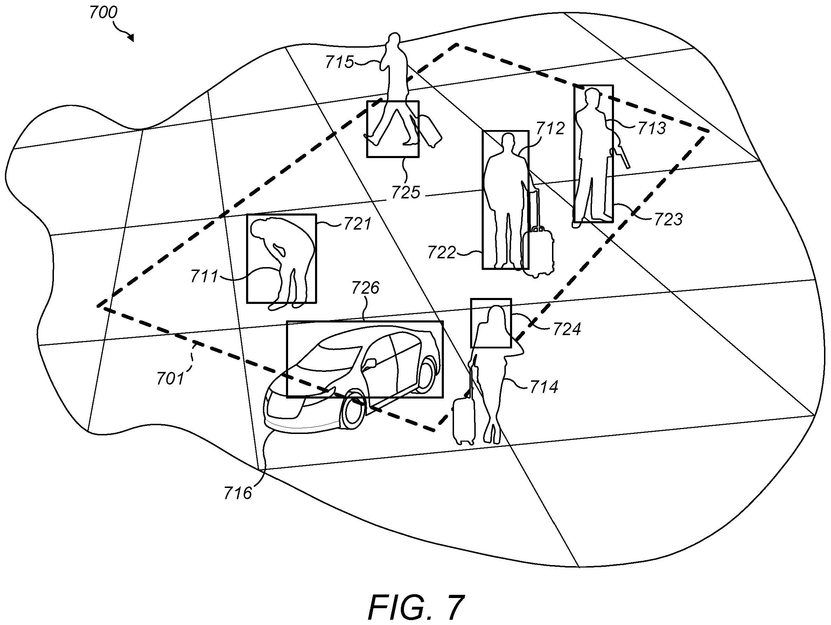

Figure 7 shows a schematic diagram of another example observable environment 700, which includes a region of interest 701 (also known as an image boundary) within an observable field of view. In the example observable environment 700 shown in figure 7, six separate entities have been identified within the image boundary 701. The system 100 has identified a sub-region that encloses the portion of the entity that falls within the image boundary 701. As will be seen from figure 7, three figures 711, 712, 713 are wholly within the boundary 701 while two figures 714, 715 and a vehicle 716 are partially within the boundary. Accordingly, each of the entities are at least partially bounded by boundary boxes 721 to 726 respectively.

As described above, the system 100 identifies characteristics that uniquely represent each entity and uses values associated with those characteristics to generate one or more characteristic vectors for each identified entity within the region of interest 701. A unique ID and location information are then associated with each characteristic vector.

The system analyses the behaviour of each entity by employing machine learning techniques to, for example, identify the posture or walking style of an identified passenger, or the amount of time that a vehicle has remained stationary. The inferred behaviour may then be used to identify a predicted optimal journey path that the entity is likely to take to an expected destination. The inferred behaviour may also be used to identify anomalies. For example, as shown in Figure 7, the posture of figure 711 may be indicative of someone having a heart-attack or another medical episode. Equally, the behaviour of figure 713 may become aggressive, threatening or dangerous. Alternatively, the system 100 may detect abnormal behaviour if the entity significantly deviates from the calculated optimal path to an expected destination.

Accordingly, embodiments of the invention enable the automatic detection of behaviours associated with one or more entities, such as vehicles or people.

### IDENTIFICATION AND TRACKING PROCESS

The system 100 is also able to track an entity by recognizing that entity at a later time or location using machine learning techniques. This is achieved by assigning a unique ID to each individual entity detected and by determining whether a detected entity has been previously identified.

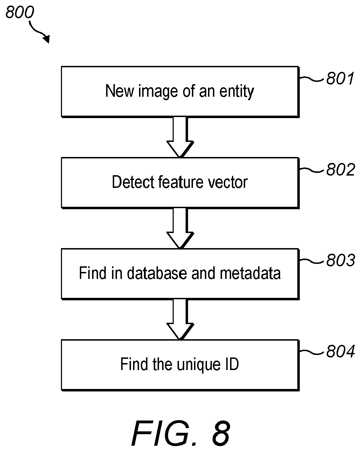

This may be achieved by the example process 800 for identifying an entity shown in Figure 8. In a first step 801, a new image is obtained of the entity. In a second step 802, a characteristic feature vector associated with the new image is determined. In a third step 803, a search database is queried in order to find similar characteristic feature vectors and corresponding metadata in the search database, for example by using a machine learning model to compare between the characteristic feature vector for the new image and each of the characteristic feature vectors in the search database. In a fourth step 804, if a similar characteristic feature vector in the search database is identified, the unique ID associated with that characteristic feature vector is found. The machine learning model may then associate the found unique ID with the new image of the entity. Accordingly, embodiments of the invention can advantageously be used for uniquely identifying any entity by comparing the similarity of a number of similar images taken over time, from different angles, or in various locations. In preferred embodiments, the unique ID may be associated with an identifier associated with each entity, such as passenger related information or a bag tag number. This enables the system to match an identified entity, such as a person or an item of baggage, with known information relating to that entity.

When seeking to identify, or re-identify, an entity from a newly obtained image, the system generates a list of images that are most similar to the query image (also known as a list of nearest neighbours). This is achieved by searching the query, or search, database for embedding vectors that are closest, in the Euclidean distance sense, to the query image embedding. Each embedding vector is represented as an N-dimensional vector in a vector-space. In some embodiments, the embedding vectors are 128-dimensional vectors, however the embedding vectors may be 2048-dimensional vectors. The relative separation in the vector-space between two embedding vectors, which each represent a different image in the database, indicates the semantic similarity between the two vectors. This can be efficiently done, as embeddings are low-dimensional real-valued vectors. Adopting such an approach enables the system to learn to use more subtle cues, like the structure of an entity's surface or the presence of additional elements, like patterns or regions of different materials, to distinguish between similar entities.

The search database may be reduced in order to improve the operational efficiency of the system and to reduce the false positive rate of the system. For example, the time stamp of each image may be compared against an expected journey time for the entity. A reduced set of images can be identified based on an expected distance that the entity will travel during a predefined time window. For example, a person may not be expected to travel 10 meters in 1 second. The system may then disregard any entities that are calculated to be located further away than this expected distance.

The most similar images produce a lower distance score that can be used to identify the original entity. The image may then be stored for future use cases, such as detecting whether any damage has occurred during the journey.

In some embodiments, additional steps are performed when machine learning and computer vision techniques alone are unable to uniquely identify an entity. For example, in preferred embodiments the system 100 retrieves biometric and passport data from a passport control system and compares the retrieved data against the characteristic feature vectors obtained at the passport control location. This enables the system 100 to definitively match a unique ID to an individual passenger. In other embodiments, where biometric and passport data is not retrieved, the system 100 may uniquely identify an individual passenger using other data sources, such passenger-provided tracking information or stored historical passenger-related data. In further embodiments, the system can identify whether a detected person is a member of staff for example a cleaner, security guard or ground crew member. This may be achieved by determining whether the unique ID or retrieved biometric data is matched with a database of airport staff.

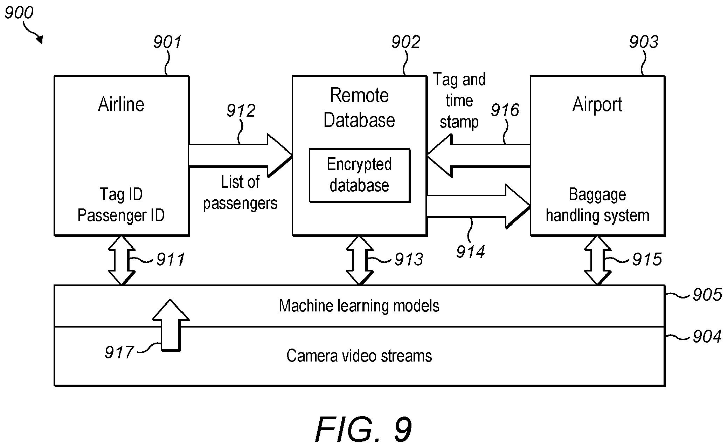

As indicated above, the above steps of identifying an entity may require the system 100 to interface with additional hardware elements. Example hardware elements are shown in figure 9, which comprises Airline Systems 901, Remote Databases 902, Airport BHS Systems 903, Camera Arrays 904, and a Machine Learning Core 905. In specific embodiments, Data 911 including bag identifiers and passenger identifiers is exchanged between the airline systems 901 and the machine learning core 905. Data 912 including a passenger list is sent from the airline systems 901 and the database 902. Data 913 including images of entities and associated metadata stored in a database is exchanged between the database 902 and the machine learning model 905, and is also sent from the database 902 to the airport systems 903. Data 915 is exchanged between the airport systems 903 and the machine learning model 905. Data 916 including a bag tag identifier and an associated timestamp are sent from the airport systems 903 to the database 902. Finally, data 917 including camera image data is sent from the camera array 904 to the machine learning model 905.

To track an entity, in preferred embodiments the system 100 produces a confidence score when a subsequent image of an entity is matched to an existing unique ID. The confidence score may be based on the following factors. Firstly, the machine learning distance score between the query image and its nearest neighbour as described above. For example, a particularly distinctive colour of vehicle or unusual item of clothing worn by a passenger can produce a higher confidence score than more regular clothing. Secondly, the time and location of the query image compared to the flight related information relating to the passenger associated with the nearest neighbour. For example, if the query image is obtained in a check-in queue but is matched with a passenger who is scheduled to leave within the next hour than that will produce a comparatively lower confidence score than if the query image were to be matched with a passenger scheduled to leave in 6 hours. Finally, the confidence score may be the sum of confidence scores produced by different types of embedding vectors. For example, a higher confidence score will be produced if the nearest neighbour has very similar facial features in addition to very similar clothing, body, posture or other features as well.

A confidence score may also be provided for the strength of an association between entities. For example, a confidence score for entities that are determined to have arrived on the same bus may be relatively low, as many people will have used the same bus and it is unlikely that all entities using the bus will be associated with all of the other entities. A confidence score for two passengers arriving by taxi will therefore be higher. The confidence score may increase or decrease based on identified behaviour between the passengers. For example, if the system identifies one or more greeting gestures then a confidence score between the associated entities will increase.

The accurate tracking of an entity is ensured by effectively maintaining the query, or search, database. As indicated above, the search database includes all entities presently known to the system. Entities may be deleted from the search database, for example if the system 100 receives a message that a particular flight has departed from the airport. This may be achieved by assigning labels to passengers who have had their boarding pass scanned when boarding a flight and receiving a notification when that particular flight departs.

When tracking an entity, the system 100 preferentially searches for nearest neighbours having embedding vectors with a high associated confidence score. In this way, the system can recognise a known person even if their face cannot be clearly identified by positively identifying their accompanying items of baggage, or clothing, or posture. Similarly, a vehicle may be uniquely identified even though the licence plate may not be distinguished.

Further to the above, if no sufficiently close match can be found then a new unique ID is assigned to the identified entity. The veracity of a new unique ID assigned to passengers may be checked when the passenger presents themselves at a passport check point. In preferred embodiments, the system 100 determines whether a passenger is a new passenger by comparing the distance score between the query image and the nearest neighbour to a predetermined threshold value. If the distance is above the predefined threshold (i.e. if the semantic similarity is below a threshold), the identified passenger is considered to be new and a new unique ID is assigned.

### MACHINE LEARNING MODELS

As indicated above, one or more machine learning algorithms, or models, may be used to uniquely identify an entity, determine whether that entity constitutes a cause for concern, and take appropriate action if the entity is considered a cause for concern.

These models are described in more detail below and may include known machine learning models such as Triplet networks and Siamese networks. In some embodiments, the models are trained using a training data set of images from a variety of different locations and/or from various angle viewpoint of cameras. In addition, the training data may be associated with values defining a timestamp value in order to uniquely identify an entity.

The machine learning models are trained to identify various characteristics associated with an image, including one or more passengers and/or objects. In preferred embodiments, this is achieved using one or more specific sub-models.

Once one or more of the models have been trained using the training data, embodiments of the invention use one or more trained models to identify entities, such as passengers or articles of baggage, within each image by extracting, mapping and comparing unique features associated with the entity.

Each model may be trained using a convolutional neural network with a plurality of nodes. Each node has an associated weight. The neural network usually has one or more nodes forming an input layer and one or more nodes forming an output layer. Accordingly, the model may be defined by the neural network architecture with parameters defined by the weights.

Thus, it will be appreciated that the neural network is trained. However, training of neural networks is well known to the skilled person, and therefore will not be described in further detail.

For example, a type model may be trained to categorise an image of bag according to one or more of the following predetermined categories shown below in Table 1:

**Table 1: Type Precisions of different baggage classifications determined according to an embodiment of the invention.**

| Label | Name | Precision | N |
|---|---|---|---|
| T01 | Horizontal design Hard Shell | 0.000 | 6 |
| T02 | Upright design | 0.889 | 476 |
| T03 | Horizontal design suitcase Non-expandable | 0.000 | 3 |
| T05 | Horizontal design suitcase Expandable | 0.000 | 5 |
| T09 | Plastic/Laundry Bag | 0.000 | 3 |
| T10 | Box | 0.939 | 33 |
| T12 | Storage Container | 0.000 | 5 |
| T20 | Garment Bag/Suit Carrier | 0.000 | 5 |
| T22 | Upright design, soft material | 0.000 | 26 |
| T22D | Upright design, combined hard and soft material | 0.944 | 748 |
| T22R | Upright design, hard material | 0.932 | 2062 |
| T25 | Duffel/Sport Bag | 0.379 | 29 |
| T26 | Lap Top/Overnight Bag | 0.357 | 42 |
| T27 | Expandable upright | 0.397 | 267 |
| T28 | Matted woven bag | 0.000 | 2 |
| T29 | Backpack/Rucksack | 0.083 | 12 |

In Table 1, N defines the number of predictions for each bag category or name, for example "Upright design", and the label is a standard labelling convention used in the aviation industry. Preferably, a filtering process may be used to remove very dark images based on an average brightness of pixels associated with the image.

It will be appreciated that a similar system of categorizing characteristic features of a vehicle, or a passenger's face or body may be achieved in substantially the same manner as described above for an object.

One specific example of a machine learning method is Metric Learning Approach. The method uses Triplet network architecture to learn embeddings of a plurality of images of an entity. To train the models, triplet images comprising a first image of a first entity, a second image of the first entity and a first image of a second entity. The training procedure searches for matching images of the entity by searching for nearest neighbours in the embedding vector space.

Other exemplary approaches are the use of convolutional features from a deep network pre-trained on an auxiliary image identification task (for example ResNet or VGG trained on IMAGENET). For each image of an entity, the machine learning builds a fixed-length descriptor by max-pooling these features over channel dimension. The model searches for matching images, by searching for nearest neighbours in the descriptor space.

Another Metric Learning Approach considers Siamese network architecture to learn embeddings of images of different entities. The data presents pairs of the same entity and different entities. For example, images of the same item of baggage may be created by applying random distortions (for example rotation, perspective warp, intensity/contrast changes) to the base baggage image. The algorithm would then search for matching baggage images, by searching for nearest neighbours in the embedding space.

One other specific example adapts NetVLAD architecture (originally used for weakly supervised place recognition) for images of an entity that match a particular scenario.

Although more or less layers may be used, and it will be appreciated that other backbone neural networks may be used instead of the above methods. Methods might use implementation of loss function for manually tuned neural network architectures or for the entity detection and segmentation, and will be known to the skilled person. The pre-processing and machine learning (deep learning and neural network) might be remotely accessible by wired or wireless communication protocols which will be known to the skilled person.

A further machine learning model that may be used is the known, pretrained YOLOv7 model as an object detection algorithm, optimized with collected real-world images and data.

### ASSOCIATED ADVANTAGES

Embodiments of the invention provide at least the following advantages.

### Unique Identification

Advantageously, embodiments of the invention are able to uniquely identify entities without the use of biometrics or a licence plate.

Embodiments of the invention facilitate tracking entities by using any feature that can be used to uniquely identify the entity. This enables the system to integrate with camera data deriving from, for example, CCTV feeds that do not have the resolution to be able to identify facial features with great accuracy, but can improve the false negative detection rates. In this way, the system may be able to positively identify an entity without using traditional means, for example using facial features or a licence plate number, and may successfully integrate with any existing camera or identification checkpoint systems for an improved detection and tracking performance.

Embodiments of the invention provide a certainty score that indicates a confidence that the entity has been correctly identified.

Embodiments of the invention are able to provide an improved and more accurate identification of passengers by requesting that passengers enrol their biometric data, such as an image of their face or a passport scan, using the passenger's phone.

### Security

Advantageously, embodiments of the invention enable improved security systems.

Embodiments of the invention facilitate detecting prohibited objects and anomalous behaviour, such as guns, smoking cigarettes, fighting, etc. Embodiments are further able to identify other entities associated with the prohibited items and anomalous behaviour by tracking the movement of a common vehicle, and identify the real-time location of the associated entities for further security action.

Embodiments of the invention facilitate using the characteristic vectors and images of an entity, or (if available) the license plate or service vehicle ID, to detect entities that are in a blacklist that may be alerted immediately to authorities. Alternatively, vehicles such as service vehicles may be excluded from a wait time threshold and/or added to a whitelist. Embodiments of the invention may learn not to issue similar alerts if an alert is marked as non-threatening or otherwise cleared by a security agent.

Embodiments of the invention may facilitate showing entities in different colour codes associated with different levels of security risk.

### Use of different Camera Types

Advantageously, embodiments of the invention enable the use of disparate and non-overlapping cameras.

Embodiments of the invention can provide analytics and an intelligent security system using existing CCTV infrastructure or using a combination of different types of cameras at low cost and a high degree of accuracy.

Embodiments of the invention can also enable the use of images taken by cameras having non-overlapping fields of view, such as CCTV cameras that are separated by a distance of about 200 metres or so.

### Traffic Analysis

Advantageously, embodiments of the invention can provide analysis of vehicle movements within an observable environment.

Embodiments of the invention may be employed in parking areas and kerbside areas around a transportation hub, such as departure and arrival terminals of an airport. Embodiments of the invention facilitate detecting whether an entity has remained in the same place for n-minutes and may issue an automatic alert if a threshold time associated with the entity or a location zone is exceeded. For example, the system may identify vehicles that occupy each lane of traffic and send an alert if the time that a vehicle remains stationary (the "stop time") exceeds a threshold time. In some embodiments the threshold time may differ for each lane of traffic, as it is more acceptable for vehicles to be stationary for extended periods of time close to the kerbside. For example, a first traffic lane that is closest to the kerbside may be considered to be a drop-off lane having the largest stop time. Accordingly, a threshold time may be set for the first lane of, for example, 15 minutes to allow vehicles to pick up and drop off their passengers in a leisurely manner. However, a second traffic lane may have a threshold time of 2 minutes or less. All other traffic lanes may have a threshold time that is zero, or close to zero, to prohibit traffic from stopping so that traffic accidents are prevented in the outside traffic lanes.

Embodiments of the invention enable the flow of traffic to be detected and tracked, and alerts sent to the relevant authorities to take appropriate action if required. Alternatively, or an autonomous notification could be displayed or announced to the traffic in the traffic lanes to help mitigate or ease congestion.

Embodiments of the invention enable statistical analysis of traffic conditions. For example, an algorithm may provide answers to questions such as: "how many vehicles and people were in Zone A in the past X-minutes, and how many of those vehicles were shuttle buses?"; "Have there been any vehicles that have been parked for more than 10 minutes in Lane1?"; and "How many passengers disembarked from the last shuttle bus?". Embodiments of the invention facilitate the use of a trained prediction model for predicting future traffic trends based on historical data.

Embodiments of the invention enable detection of vehicles in traffic lanes where parking and drop-offs are not allowed, and to determine whether stationary traffic in these lanes is unable to move due to a build up of traffic in front, or due to dropping people in a dangerous location. Build up of traffic may trigger a congestion alert.

Embodiments of the invention enable traffic flow to be visualised in real-time on a map, for example a 3D digital model with different colours representing the density of people and vehicles in the observable environment.

Embodiments of the invention also enable the tracking of vehicles using all detectable features of the vehicle - not just the licence plate number. Accordingly, embodiments of the invention facilitate tracking of vehicles around a facility or commercial environment such as a departure terminal without the need to use automatic number plate recognition (ANPR) technology to read the licence plate. This is particularly advantageous in countries such as the US where only rear number plates are used. Further, because CCTV cameras are typically further spaced apart in their deployment around the departure terminal, it is often not possible to read the LPN even if it is present. Advantageously, where the vehicle number plate can be identified, embodiments of the invention facilitate real-time detecting and tracking vehicles license plates that are in a black list.

### Customer Services

Advantageously, embodiments of the invention enable the provision of various customer services.

Embodiments of the invention facilitate determining a certainty score for a passenger's identity and using that score to provide customer service recommendations. For example, a generic low security concern, such as advertising restaurants to a passenger based on the determined preferences of the passenger, can be provided even if the certainty score is very low. However, a passenger may only board a plane if the system determines there is a high certainty score, which may be obtained by combining computer vision techniques with phone triangulation methods to uniquely identify the passenger.

Embodiments of the invention facilitate using biometric and vehicle-detection for providing and coordinating customer services, such as accurately recording the time when a vehicle entered and exited a parking area, automatically assigning vacant parking spaces to vehicles on entering a parking area, automatically calculating the payable parking fees based on the entrance and exit times, and providing other services such as autonomous robots for baggage handling.

Embodiments of the invention facilitate an analysis of the frequency that traffic arrives at a drop-off/pick-up point, and so the arrival of hotel shuttle buses can be monitored for service performance tracking. This enables the provision of accurate reports of public and hotel shuttle buses, to thereby find delays and determine the number of passengers using these services. Additionally, as indicated above, embodiments of the invention facilitate identifying a correlation between different passengers based on using the same mode of transport to arrive at, for example, an airport departure terminal. For example, if a first passenger is subsequently determined to be a security risk as they pass through the departure terminal, another passenger that arrived at the departures terminal on the same bus as the first passenger will be considered to have a higher probability of being a security risk due to the identified correlation between them and the first passenger.

Embodiments of the invention may facilitate further customer services, including: providing a holistic autonomous journey from arrival to the airport to the destination; sending notifications to passengers and providing directions to a departure gate via the shortest path; and providing automated baggage drop-off and pickup services at the kerbside or in a parking area.

The above detailed description of embodiments of the invention are not intended to be exhaustive or to limit the invention to the precise form disclosed. For example, while processes or blocks are presented in a given order, alternative embodiments may perform routines having steps, or employ systems having blocks, in a different order, and some processes or blocks may be deleted, moved, added, subdivided, combined, and/or modified. Each of these processes or blocks may be implemented in a variety of different ways. Also, while processes or blocks are at times shown as being performed in series, these processes or blocks may instead be performed in parallel, or may be performed at different times.

The teachings of the invention provided herein can be applied to other systems, not necessarily the system described above. The elements and acts of the various embodiments described above can be combined to provide further embodiments.

While some embodiments of the inventions have been described, these embodiments have been presented by way of example only, and are not intended to limit the scope of the disclosure. Indeed, the novel methods and systems described herein may be embodied in a variety of other forms; furthermore, various omissions, substitutions and changes in the form of the methods and systems described herein may be made without departing from the spirit of the disclosure.

## Claims

1. An image processing method, the method comprising:
receiving a plurality of images of an observable environment;
detecting a plurality of entities within the observable environment;
determining location information and a unique identifier for each entity;
determining one or more behaviours of a first entity, comprising identifying one or more predetermined behaviours with a first machine learning model and/or identifying one or more anomalous behaviours with a second machine learning model;
determining an association between the first entity and one or more other entities based on the one or more behaviours; and
storing data associated with the first entity in a database, the data comprising the location information, unique identifier, and the one or more other entities.

2. An image processing system, the system comprising a processor configured to perform the following steps:
receive a plurality of images of an observable environment;
detect a plurality of entities within the observable environment;
determine location information and a unique identifier for each entity;
determine one or more behaviours of a first entity, comprising identifying one or more predetermined behaviours with a first machine learning model and/or identifying one or more anomalous behaviours with a second machine learning model;
determine an association between the first entity and one or more other entities based on the one or more behaviours; and
store data associated with the first entity in a database, the data comprising the location information, unique identifier, and the one or more other entities.

3. The image processing method of claim 1 or the image processing system of claim 2, wherein a third machine learning model detects the plurality of entities and defines a bounding box for each detected entity, each bounding box enclosing the respective entity.

4. The image processing method of claim 1 or the image processing system of claim 2, wherein each bounding box is labelled with the unique identifier.

5. The image processing method of claim 1 or the image processing system of claim 2, wherein a fourth machine learning model determines the unique identifier for each entity and defines a characteristic vector associated with each unique identifier.

6. The image processing method of claim 1 or the image processing system of claim 2, wherein the characteristic vector is defined by a plurality of characteristic feature values associated with the respective entity, or further comprising comparing the characteristic vector associated with the first entity with the characteristic vector associated with a further entity in a further image and, if the comparison is within a configured threshold, determining that the first entity and the further entity are the same.

7. The image processing method of claim 1 or the image processing system of claim 2, wherein the stored data further comprises the characteristic vector.

8. The image processing method of claim 1 or the image processing system of claim 2, wherein a fifth machine learning model determines the one or more behaviours of the first entity, the fifth machine learning model comprising the first and second machine learning models.

9. The image processing method of claim 1 or the image processing system of claim 2, further comprising training the first machine learning model with a training dataset to recognise the predetermined behaviours.

10. The image processing method of claim 1 or the image processing system of claim 2, further comprising calculating a score for each association between the first entity and the one or more other entities, or wherein determining an association between the first entity and one or more other entities comprises identifying a plurality of passengers that entered or exited the same vehicle, or wherein determining the association between the first entity and one or more other entities is further based on identifying whether the one or more other entities are proximate to the first entity, or wherein the first entity is a vehicle and the one or more predetermined behaviours include collecting or depositing passengers, remaining stationary in a predetermined zone for longer than a threshold time, and entering or exiting restricted areas, or wherein the first entity is a passenger and the one or more predetermined behaviours include the passenger talking to another passenger, a greeting gesture, or the passenger entering or exiting a vehicle.

11. The image processing method of claim 1 or the image processing system of claim 2, wherein the anomalous behaviour includes threatening body-language, possession of prohibited items, significant deviations from an expected journey pathway, or serious medical episodes, preferably wherein if anomalous behaviour is identified then the method further comprises sending an alert.

12. The image processing method of claim 1 or the image processing system of claim 2, further comprising associating each image with a timestamp and identifying the time first seen for the first entity based on the timestamp associated with the earliest image including the first entity.

13. The image processing method of claim 1 or the image processing system of claim 2, wherein the location information is determined based on the location of a predetermined portion of the bounding box, preferably wherein the predetermined portion is the midpoint of a bottom edge of the bounding box, or wherein determining location information for each entity comprises determining a set of pixel coordinates for each detected entity, or wherein the location information comprises latitude and longitude coordinates, or GPS coordinates, preferably further comprising determining a set of latitude and longitude coordinates based on the calculated pixel coordinates, or further comprising determining the location information using a 3D to 2D camera correlating system.

14. The image processing method of claim 1 or the image processing system of claim 2, wherein one or more of the plurality of images are provided by a closed-circuit television network (CCTV), or wherein the database and/or machine learning models may be implemented on a cloud-based server, or wherein the observable environment is subdivided into one or more polygonal zones, each polygonal zone defined by a plurality of vertices and each vertex being associated with a respective set of GPS coordinates.

15. The image processing method of claim 1 or the image processing system of claim 2, further comprising analysing the stored data to perform one or more of: uniquely identifying each detected entity; determining a security risk associated with each detected entity; analysing vehicle movements; and providing one or more customer services.
